# EUROPÄISCHE PATENTSCHRIFT

(11) **EP 0 532 980 B1**
(45) Veröffentlichungstag und Bekanntmachung des Hinweises auf die Patenterteilung: **10.01.1996**
(21) Anmeldenummer: 92115000.9
(22) Anmeldetag: 02.09.1992
(51) Int. Cl.: H02G 15/076, H02G 15/013, G02B 6/44

(54) **Haubenmuffe für die Aufnahme von Kabelspleissen**
Sleeve with cap for receiving cable splices
Manchon à chapeau pour la réception de jonctions de câbles

(30) Priorität: 17.09.1991 DE 4130906; 25.05.1992 DE 4217296
(43) Veröffentlichungstag der Anmeldung: 24.03.1993
(73) Patentinhaber: SIEMENS AKTIENGESELLSCHAFT, D-80333 München (DE)
(72) Erfinder: Bachel, Ernst, W-8081 Geltendorf (DE); Kunze Dieter, Dipl.-Ing., W-8027 Neuried (DE); Licker, Anton-Günther, W-8000 München 83 (DE)

(56) Entgegenhaltungen:
- WO-A-90/08336
- DE-B- 1 088 575
- DE-C- 561 193
- DE-C- 913 303
- DE-C- 1 021 046
- FR-E- 37 016
- US-A- 586 464

## Beschreibung

Die Erfindung betrifft eine Haubenmuffe für die Aufnahme von Lichtwellenleiterspleißkassetten, bei der eine abnehmbare Abdeckhaube auf einem Muffensockel dicht aufgesetzt ist und der Muffensockel mindestens eine von der Muffenlängsachse unter einem Winkel abweichende Kabel einführung aufweist.

Eine derartige Haubenmuffe ist bereits aus der PCT-Patentanmeldung WO 90/08336 bekannt. Hier werden wie in herkömmlicher Weise die Kabel von der Unterseite her durch gerade abstehende Kabeleinführungsstutzen eingeführt. Die Ausführungsform der Haubenmuffe selbst ist zylindrisch und kann nur als Einzelmuffe verwendet werden. Bei beengten Platzverhältnissen können bezüglich der Kabeleinführungen Schwierigkeiten auftreten. Außerdem ist eine Erweiterungsmöglichkeit für größere Einheiten oder für nachträgliche Vergrößerung des Aufnahmevolumens nicht möglich.

Aus DE-C-10 21 046 ist eine Haubenmuffe bekannt, bei der eine abnehmbare Abdeckhaube auf einem Muffensockel dicht aufgesetzt ist, wobei der Muffensockel eine von der Muffenlängsachse unter einem Winkel abweichende Kabeleinführung aufweist. Diese Haubenmuffe ist nach dem Prinzip einer Taucherglocke ausgeführt, wobei die in der Haube befindliche Luft bei Überschwemmung komprimiert wird. Der Boden der Haubenmuffe mit der Kabeleinführung ist schrägverlaufend angeordnet, damit Kondenswasser und Restwasser über ein Sieb wieder auflaufen können. Für feuchtigkeitsempfindliche Anordnungen und Kabel ist eine solche Ausführung jedoch nicht geeignet.

In der US-A- 586 464 ist eine glockenförmige Muffe beschrieben, bei der ein Kabel zentral eingeführt wird. Entlang des umlaufenden Randes sind Kabeleinführungsöffnungen angeordnet, durch die Kabel nach außen abgeführt werden können, wobei sie auf Grund der Randlage abgebogen werden können. Die Abdichtung erfolgt durch Preßdichtungen.

Aufgabe der Erfindung ist nun, eine Haubenmuffe zu schaffen, bei der die Einführungsbereiche so gestaltet sind, daß die Kabel platzsparend eingeführt werden können, wobei zusätzlich Möglichkeiten zur Erweiterung des Aufnahmevolumens gegeben sein sollen. Die gestellte Aufgabe wird gemäß der Erfindung mit einer Haubenmuffe der eingangs geschilderten Art dadurch gelöst, daß die Kabeleinführungen als Kabeleinführungsstutzen ausgebildet und an der Bodenplatte des Muffensockels angeordnet sind, daß Kabelabfangvorrichtungen an jedem inneren Ende der Kabeleinführungsstutzen angeordnet sind und daß die Kabelabfangvorrichtung aus einer in Richtung der Kabeleinführungsachse ausgerichteten Klemmvorrichtung besteht.

Ein sehr wesentlicher Vorteil an der Ausführungsform einer Haubenmuffe gemäß der Erfindung liegt nun darin, daß die im Muffensockel befindlichen Einführungsstutzen nicht mehr wie in herkömmlicher Weise parallel zur Muffenlängsachse, sondern abgewinkelt hierzu angeordnet sind. Dies ergibt bei der Montage bei normalen wie auch besonders bei beengten Platzverhältnissen erhebliche Erleichterungen, da die Kabel nicht mehr in einem Bogen in Einführungsrichtung gebracht werden müssen. Dies ist besonders auch im Hinblick auf die Einführung von Lichtwellenleiterkabeln von Vorteil, da hier enge Biegeradien absolut zu vermeiden sind. Deshalb mußten bei den herkömmlichen Kabeleinführungen in Richtung der Muffenlängsachse große Freiräume unterhalb der Haubenmuffen vorgesehen werden. Dies ist bei der Haubenmuffe gemäß der Erfindung nicht mehr der Fall, da durch die Schrägrichtung der Kabeleinführungsstutzen die Kabel beinahe in normaler Verlaufsrichtung eingeführt werden können. Durch diese Muffenform ist es also möglich, daß diese Haubenmuffen auch in extrem niedrigen Behältnissen eingesetzt werden können. Die Ausführungsform der Haubenmuffen gemäß der Erfindung weicht auch durch ihre flache Aufbauform von den bisherigen Haubenmuffen ab und eignet sich insbesondere für die Aufnahme von kassettenförmigen Spleißaufnahmen. Durch eine solche flache Bauform, zumindest im Bereich des Muffensockels, ist es möglich, daß bei größerem Aufnahmebedarf mehrere solche Haubenmuffen hintereinander angerodnet werden können, wobei entsprechende Verbindungsöffnungen den Durchgang über den gesamten Muffenverbund zulassen. Diese Verbindungsöffnungen sind nach außen abgedichtet, so daß die Dichtungsverhältnisse beibehalten sind. Der Aufbau dieser Muffenform läßt auch zu, daß die Hauben der hintereinander angeordneten Haubenmuffen allein abgenommen werden können, so daß jeweils nur der für Arbeiten benötigte Muffenraum freigelegt ist.

Die Anordnung der Kabeleinführungsstutzen gemäß der Erfindung erfolgt unter einem Winkel zur Muffenlängsachse im Muffensockel, wobei zweckmäßigerweise, was jedoch nicht zwingend ist, die Einführungsstutzen symmetrisch und spiegelbildlich zur Muffenlängsachse angeordnet sind und jeweils in die Richtung der einzuführenden bzw. auszuführenden Kabel weisen. Diese Abwinkelung zur Muffenlängsachse kann soweit geführt sein, daß Kabeleinführungsstutzen sogar senkrecht zur Muffenlängsachse verlaufen, das heißt, daß sie direkt seitlich vom Muffensockel abstehen.

Die Ausführungsformen der Haubenmuffen gemäß der Erfindung lassen sich gleichermaßen in Kabelschächten, auf Kabelmasten oder Kabelrosten verwenden, so daß durch einen derartigen Muffenaufbau sich auch Typenreduzierungen realisieren lassen.

Die Erfindung wird nun anhand von vierzehn Figuren näher erläutert.
- Figur 1: zeigt den Querschnitt durch die Haubenmuffe.
- Figur 2: zeigt die Frontansicht des Muffensockels.
- Figur 3: zeigt einen Schnitt durch den Muffensockel im Bereich einer ausbrechbaren Längsöffnung.
- Figur 4: zeigt den Draufblick auf den Muffensockel, wobei die Schnittlinien für die Figuren 1 und 3 angedeutet sind.
- Figur 5: zeigt eine Seitenansicht der Haubenmuffe.
- Figur 6: zeigt die Hintereinanderanordnung mehrerer Haubenmuffen.
- Figur 7: zeigt einen schematischen Querschnitt durch einen Muffensockel, der speziell für eine Verteilermuffe ausgebildet ist.
- Figur 8: zeigt eine Muffensockelvariante mit der Kombination von seitlich und senkrecht nach unten ausgeführten Kabeleinführungsstutzen.
- Figur 9: zeigt den Abschluß von Kabeleinführungsöffnungen mittels Stopfen.
- Figur 10: zeigt die Anordnung von Haubenmuffen auf einer Traverse innerhalb eines Kabelschachtes.
- Figur 11: zeigt eine platzsparende Schräganordnung von Haubenmuffen innerhalb eines Kabelschachtes in seitlicher Ansicht.
- Figur 12: zeigt die Anordnung von Figur 11 in einer Draufsicht.
- Figur 13: zeigt die Anordnung einer Haubenmuffe unterhalb eines Schachtdeckels.
- Figur 14: verdeutlicht, daß die Haubenmuffen auch als Mastmuffen verwendet werden können.
- Figur 15: zeigt die Klemmvorrichtung im Abfangelement der Kabelabfangvorrichtung gemäß der Erfindung.
- Figur 16: zeigt die Lagerung für das Abfangelement gemäß der Erfindung.
- Figur 17: zeigt einen Querschnitt durch eine Haubenmuffe mit Kabelabfangvorrichtungen gemäß der Erfindung.
- Figur 18: zeigt eine Draufsicht auf den Muffensockel der Haubenmuffe nach Figur 17.
- Figur 19: zeigt eine Abwandlung eines Muffensockels, bei dem der Boden von der Mittelachse nach beiden Außenseiten hin unter spitzen Winkeln jeweils schräg nach aufwärts verläuft.

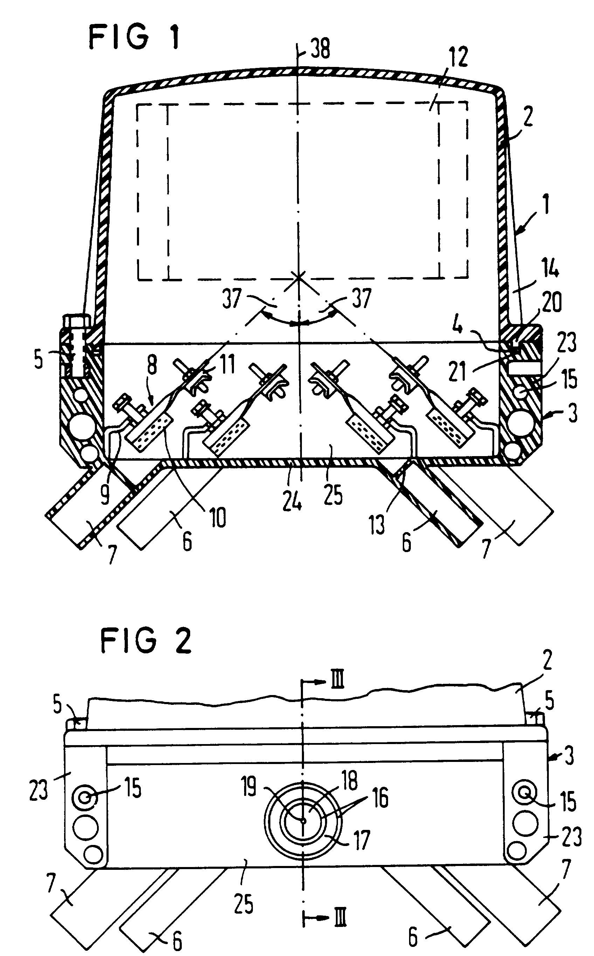

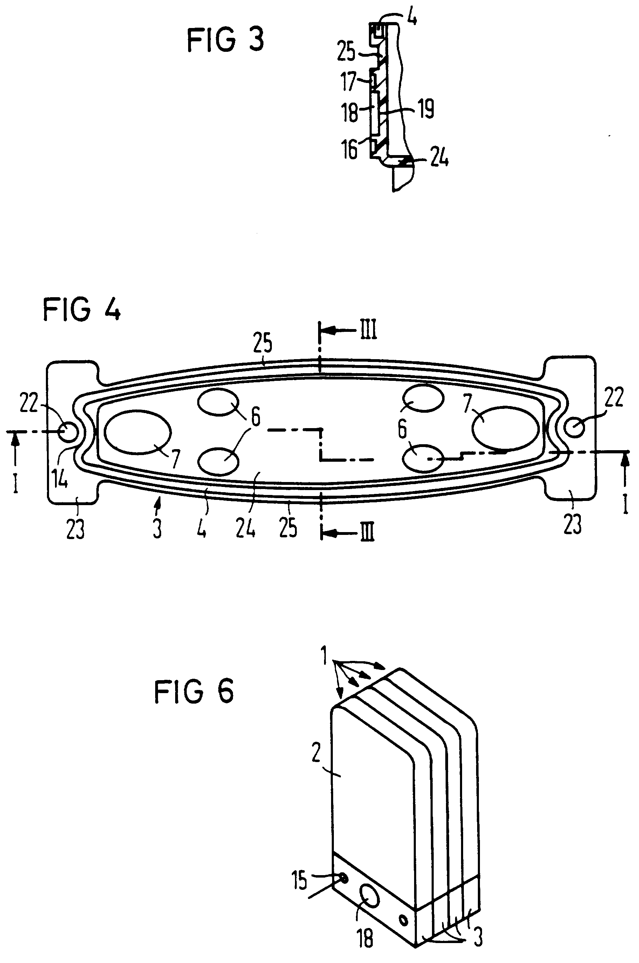

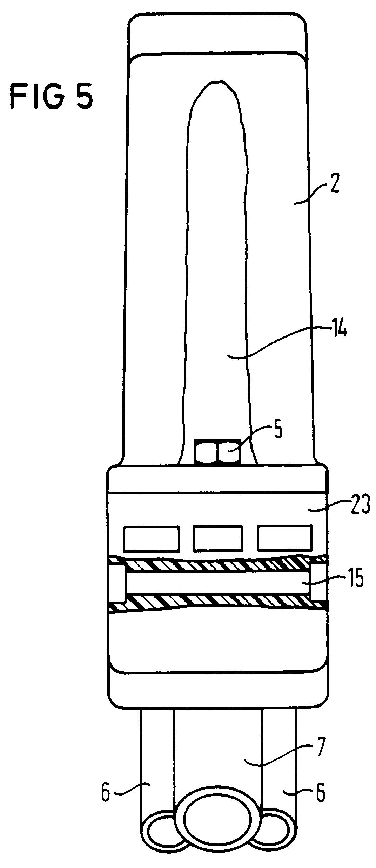

Figur 1 zeigt nun eine Haubenmuffe 1 gemäß der Erfindung im Querschnitt, wobei der Schnittverlauf in Figur 4 angegeben ist. Im Boden 24 des Muffensockels 3 sind die unter den Winkeln 37 abstehenden Kabeleinführungsstutzen 6 und 7 angeordnet, die zum Beispiel auch im Durchmesser verschieden sein können. Bei dieser Anordnung ist ersichtlich, daß die Kabeleinführungsstutzen 6 und 7 spiegelbildlich zur Muffenlängsachse 38 verlaufen. Auf diese Weise können die ein- bzw. auszuführenden Kabel mehr von der Seite her eingeführt werden wie es dem Kabelverlauf entspricht, so daß sich die bisher nötigen Einführungsbogen für die Kabel von nahezu 90° wesentlich kleiner halten lassen bzw. entfallen. Dies erleichtert die Montage und zugleich kann der bisher benötigte Freiraum unterhalb der Haubenmuffe reduziert werden. Besonders beim Einsatz von Lichtwellenleiterkabeln ist eine solche Maßnahme von Vorteil, da diese nicht beliebig stark abgebogen werden dürfen. Aus dieser Figur ist weiterhin ersichtlich, daß die Kabeleinführungsstutzen 6 und 7 mit entsprechend dichten Abschlüssen 13 versehen sind, die dort innerhalb oder an den Enden angeordnet werden können. Diese Abschlüsse 13 werden bei Bedarf durchbrochen, so daß alle nicht benötigten Kabeleinführungsstutzen 6 bzw. 7 dicht geschlossen bleiben. Im Inneren des Muffensockels 3 ist zum Beispiel jeweils im Anschluß an jeden Kabeleinführungsstutzen 6 bzw. 7 eine Kabelabfangvorrichtung 8 vorgesehen, die an einem im Muffensockel 3 befestigten Bügel 9 angeordnet sind. Eine solche Kabelabfangvorrichtung 8 besteht im wesentlichen aus einem griffigen Abfangblech 10 für den Kabelmantel und aus einer Befestigungsvorrichtung 11 für das zugfeste Element des Kabels, insbesondere eines Lichtwellenleiterkabels.

In den Seitenwänden 23 des Muffensockels 3 sind durchgehende Längsbohrungen 15 eingebracht, die zur Einführung einer staboder bolzenförmigen Verbindungs- bzw. Führungsvorrichtung dient. Auf diese stabförmigen Führungsvorrichtungen lassen sich nun mehrere solche Haubenmuffen 1 hintereinander anordnen und mittels Schraubelemente fixieren, so daß auf diese Weise ein ganzer Verbund von Haubenmuffen gebildet werden kann.

Auf jeden einzelnen Muffensockel 3 wird eine Abdeckhaube 2 über ein umlaufendes Dichtungssystem, bestehend aus einer Nut 4, einer elastischen oder plastischen Dichtungseinlage 21 und einer in die Nut 4 eintauchenden Feder 20, aufgebracht. Der nötige Anpreßdruck wird mit Verbindungsschrauben 5 hergestellt, wobei hierzu in der Abdeckhaube 2 jeweils eine Einziehung 14 vorgesehen ist. Durch diese Einziehungen 14 und durch die ovale Form der Abdeckhaube 2 wird eine zusätzliche Versteifung erreicht. Die Größe der Abdeckhaube 2 ist entsprechend des Verwendungszweckes gestaltet, wobei hier angedeutet ist, daß sie für das Volumen von Lichtwellenleiterspleißkassetten 12 ausgelegt ist, d.h . die inneren Breiten- und Höhenausdehnungen der Abdeckhaube sind so groß, daß eine gebräuchliche Lichtwellenleiterspleißkassette aufgenommen werden kann. Die Tiefenausdehnung ist so bemessen, daß mindestens eine, vorzugsweise jedoch vier hintereinanderliegende Lichtwellenleiterspleißkassetten aufgenommen werden können. Im allgemeinen wird eine ovale Haubenform gewählt, da diese Form besonders formstabil ist, wobei die seitlichen Einziehungen 14 zusätzliche Versteifungen bilden.

Die Figur 2 zeigt die Haubenmuffe 1 nach Figur 1 in einer Frontansicht, wobei angezeigt ist, daß die Seitenwände 23 jeweils als Flansch ausgebildet sind, so daß sich beim Aneinanderfügen mehrerer Haubenmuffen 1 eine gegenseitige Abstützung herstellen läßt.

Außerdem ist deutlich, daß in der Frontwandung 25 des Muffensockels 3 eine Längsöffnung 18 vorgesehen ist, die bei Bedarf ausgebrochen werden kann, zum Beispiel für eine Längsverbindung über mehrere hintereinander liegende Haubenmuffen 1 hinweg. Diese Längsöffnung 18 ist mit einem Dichtungssystem umgeben, bestehend zum Beispiel aus zwei ringförmigen Erhebungen 16, zwischen denen somit eine Ringnut 17 entsteht, in welche eine elastische oder plastische Dichtung eingesetzt werden kann. Zur Erleichterung beim Ausschneiden der Längsöffnung 18 bei Bedarf ist zur Führung des Schneidewerkzeuges eine zentrische Vertiefung 19 eingebracht.

Die Figur 3 zeigt einen Schnitt durch die Frontwandung 25 des Muffensockels 3 im Bereich einer vorgesehenen Längsöffnung 18, die kreisförmig bei Bedarf ausgeschnitten werden kann. Als Ansatzhilfe für das Schneidewerkzeug ist eine zentrische Vertiefung 19 vorgesehen. Um die ausschneidbare Längsöffnung 18 herum ist durch zwei konzentrisch verlaufende Erhebungen 16 eine Ringnut 17 gebildet, in die ein entsprechendes Dichtungsmittel eingesetzt werden kann. Im oberen Bereich der Wandung 25 ist außerdem die Nut 4 für das Dichtungssystem zur Abdeckhaube erkennbar. Die für diese Figur maßgebliche Schnittführung III-III ist in Figur 4 angegeben.

In Figur 4 wird der Muffensockel 3 in einer Draufsicht bei geöffneter Abdeckhaube 2 gezeigt, so daß hier die Lage der als ovale Öffnungen erscheinenden, schräg abstehenden Kabeleinführungsstutzen 6 und 7 deutlich wird. Außerdem sind die als seitliche Flansche ausgebildeten Seitenwände 23 deutlich erkennbar, in denen die Bohrungen 22 für die Verbindungsschrauben eingebracht sind. Dabei wird deutlich, daß das als Nut 4 erscheinende Dichtungssystem in den Bereichen der Verschlußelemente den Einziehungen 14 der Abdeckhaube 2 folgend ausgebildet ist. Weiterhin sind die Schnittführungen I-I für die Figur 1 und III-III für die Figur 3 eingezeichnet.

Die Figur 5 zeigt die Haubenmuffe gemäß der Erfindung in einer Seitenansicht, wobei hier besonders die Einziehung 14 in der Abdeckhaube 2 in Erscheinung tritt. Im Bereich dieser Einziehung 14 ist auch das Verschlußelement 5 zu sehen, mit dem die Abdeckhaube 2 auf dem Muffensockel 3 befestigt wird. In der als Flansch ausgebildeten Seitenwandung 23 ist durch einen Teilschnitt die Bohrung 15 sichtbar, in die entsprechende Führungsvorrichtungen beim Aneinandersetzen von mehreren Muffen eingeführt werden. Außerdem kann diese Bohrung 15 auch zur Befestigung mittels Schrauben verwendet werden. Im unteren Bereich des Muffensockels 3 befinden sich die Kabeleinführungsstutzen 6 und 7, die hier unterschiedlichen Durchmesser aufweisen.

Die Figur 6 verdeutlicht skizzenhaft die Anordnung mehrerer Haubenmuffen 1 hintereinander in schematischer Form, wobei über die fluchtenden Bohrungen 15 die gemeinsame Fixierung und Befestigung erfolgt. Über die ausbrechbaren Längsöffnungen 18 mit dem entsprechenden Dichtungssystem lassen sich bei Bedarf Längsverbindungen über die einzelnen Muffensockel 3 herstellen.

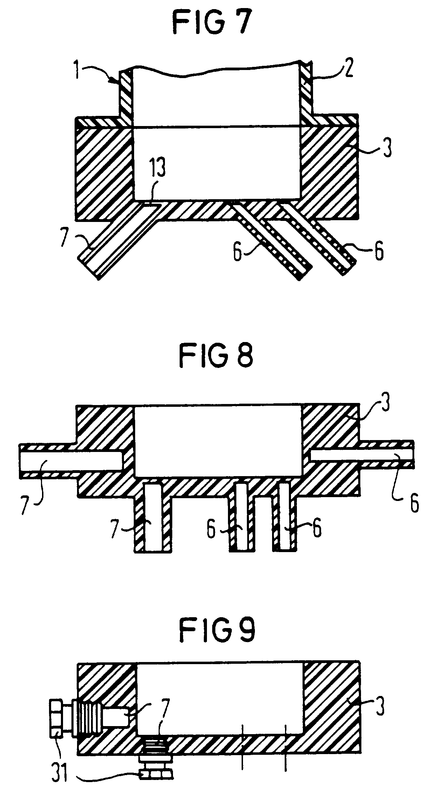

Die Figur 7 zeigt einen schematischen Querschnitt durch einen Muffensockel 3 gemäß der Erfindung mit schräg ausgeführten Kabeleinführungsstutzen 6 und 7, die mit einem dichten Abschluß 13 versehen sind. Eine derartige Ausführungsform kann beispielsweise für eine typische Verzweigermuffe dienen, da für das ankommende, dicke Kabel der Einführungsstutzen 7 mit großem Durchmesser und für die dünneren abgehenden, verzweigenden Kabel die Kabeleinführungsstutzen 6 mit kleinerem Durchmesser verwendet werden.

Die Figur 8 verdeutlicht eine extreme Ausbildung einer Haubenmuffe gemäß der Erfindung, bei der im Muffensockel 3 waagerecht, also um 90° zur Muffenlängsachse abstehende Kabeleinführungsstutzen 6 und 7 angeordnet sind, wobei im Muffensockelboden Kabeleinführugnsstutzen 6 und 7 in bisher bekannter Weise angesetzt sind. So sind vielerlei dazwischen liegende Variationen möglich, mit denen entsprechende Anpassungen an die Verhältnisse erreicht werden können. Es können beispielsweise auch die aus den Seitenwänden des Muffensockels 3 ausgeführten Kabeleinführungsstutzen 6, 7 schräg nach unten weisend verlaufen. Im Prinzip könnte bei den seitlichen Ausführungen auch eine Abwinkelung nach aufwärts erfolgen; doch ist hier die Gefahr gegeben, daß ablaufendes Wasser mit der Zeit in den Muffensockel eindringt.

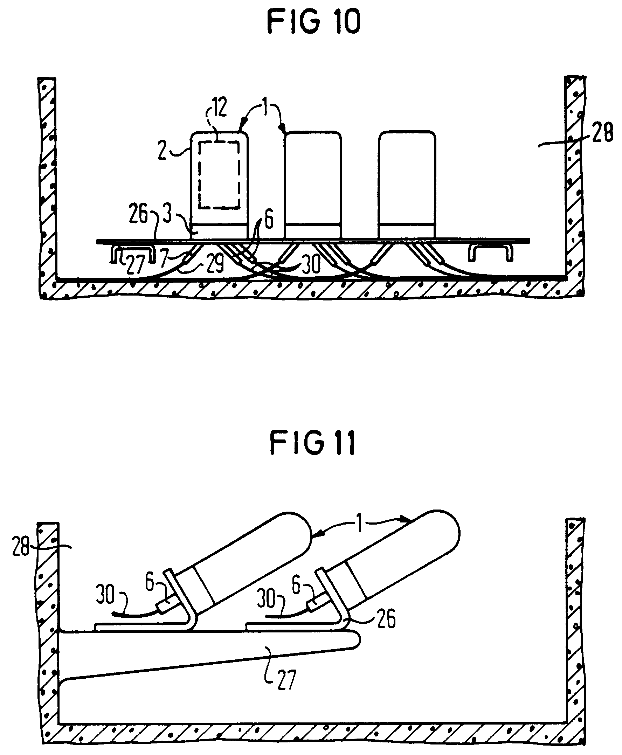

Die Figur 9 zeigt einen Muffensockel 3 in schematischer Anordnung, wobei hier lediglich Kabeleinführungsöffnungen vorhanden sind, die mittels Stopfen 31 verschlossen werden können. Ein derartiger Verschluß kann selbstverständlich auch bei der Ausbildung von angesetzten Kabeleinführungsstutzen 6 und 7 der vorhergehenden Beispiele angewandt werden.

In Figur 10 ist nun dargestellt, daß bei der neuen Ausbildung der Haubenmuffen mit schräg angesetzten Kabeleinführungsstutzen auch der Einsatz in Kabelschächten 28 in Frage kommt. Diese Haubenmuffen 1 gemäß der Erfindung sind hier auf einer Trageschiene 26 befestigt und bilden hier ein sogenanntes Muffenfeld. Dabei kann zur weiteren Ersparung von Höhe eine Schräganordnung der Haubenmuffen 1 vorgenommen werden. Bei einer solchen Anordnung wird deutlich, daß der Freiraum unterhalb der Traversen 27, auf denen die Tragschiene 26 befestigt ist, relativ gering gehalten werden kann infolge der schräg auslaufenden Kabeleinführungsstutzen 6 und 7. Es wird besonders deutlich, daß die ankommenden Kabel 29 wie auch die abgehenden Kabel 30 je nach Ausführungswinkel sehr flach geführt werden können.

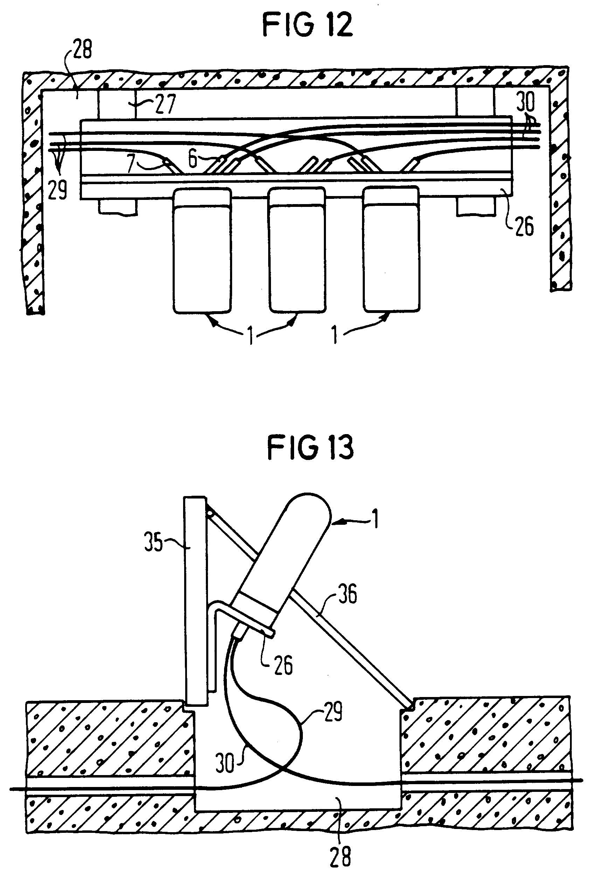

In Figur 11 wird in einer Seitenansicht des Kabelschachtes 28 gezeigt, daß auf einer im Kabelschacht 28 befestigten Traverse 27 zwei winkelförmige Tragschienen 26 angeordnet sind, an deren abstehenden Schenkel die Haubenmuffen 1 schräg befestigt sind. Auf diese Weise ist eine zusätzliche Raumersparnis zu erreichen.

In Figur 12 ist die Schräganordnung der Haubenmuffen 1 auf der abgewinkelten Trageschiene 26 in einer Draufsicht dargestellt, so daß deutlich wird, daß zusätzlich in der Höhe Raum gespart werden kann, da die Kabel 29 und 30 auf dem Bodenblech der Trageschiene 26 abgelegt und geführt werden können.

Die Figur 13 zeigt, daß die Montage von Haubenmuffen 1 gemäß der Erfindung auch bei Kabelschächten 28 verwendet werden können, die mit einem klappbaren Schachtdeckel 35 abgedeckt sind.

In montagefreundlicher Weise ist hier die Trageschiene 26 für die Haubenmuffen 1 am Schachtdeckel 35 montiert, so daß die Haubenmuffe 1 bei geöffnetem Schachtdeckel dem Monteur in Arbeitshöhe gegenüber liegt. Der Schachtdeckel 35 wird mit Hilfe einer Stütze 36 fixiert. Die abgehenden Kabel 29 und 30 sind mit genügendem Längenplus für das Ausklappen eingeführt.

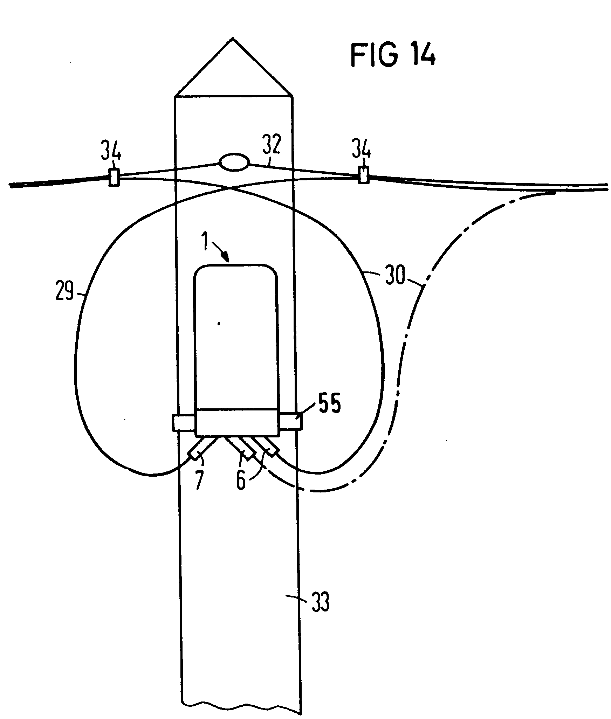

In Figur 14 wird dargestellt, daß die Haubenmuffe 1 gemäß der Erfindung auch als Mastmuffe verwendet werden kann, wobei sie mit Hilfe von Haltevorrichtungen 55, zum Beispiel in Form von Spannbändern, am Mast 33 befestigt wird. Die schräg abstehenden Kabeleinführungsstutzen 6 bzw. 7 begünstigen auch hier die Kabeleinführung, wobei diese in der Richtung des Kabelverlauf 5 (gestrichelt gezeichnet) oder entgegen der Kabelführungsrichtung (ausgezogen gezeichnet) erfolgen kann. Die Kabeltrageseile 32 werden oberhalb der Haubenmuffe 1 am Mast besfestigt, wobei die Abführungen der Kabel 29 bzw. 30 mit entsprechenden Kabelhalterungen 34 gesichert sind.

Bei einer derartigen Haubenmuffe werden nun gemäß der Erfindung die Kabeleinführungen durch winkelig in den Boden des Muffensockels einmündende Kabeleinführungsstutzen vorgenommen, wodurch die Einführung der Kabel insbesondere im Bereich des Raumes außerhalb und unterhalb der Haubenmuffe verbessert wird. Außerdem sind bei einer derartigen Haubenmuffe die Kabeleinführungen auch bezüglich der Kabelabfangungen insofern verbessert, da diese innerhalb des Muffensockels direkt in Kabeleinführungsrichtung angeordnet sind. Diese Kabeleinführungen bestehen im wesentlichen aus an sich bekannten Klemmvorrichtungen, die jedoch in montagefreundlicher Art in Einführungsrichtung zentrisch zum Zentralelement des eingeführten Kabels liegend angeordnet sind.

Dieser Erfindung liegt nun weiterhin die Aufgabe zugrunde, die Kabeleinführungen bei der winkeligen Einführung der Kabel zu vereinfachen und weiterhin montagefreundlicher zu gestalten. Diese gestellte Aufgabe wird nun mit einer eingangs erläuterten Haubenmuffe gemäß der Erfindung dadurch gelöst, daß die Kabelabfangvorrichtung aus einer in Richtung der Kabeleinführungsachse ausgerichteten Klemmvorrichtung besteht, daß diese Klemmvorrichtung in einem Abfangelement angeordnet ist und daß das Abfangelement in einem Lagerelement am Muffenkörper befestigt ist.

Der Vorteil dieser Kabelabfangvorrichtung besteht im wesentlichen darin, daß eine Klemmvorrichtung in der Position der Einführungsachse eingesetzt werden kann, wobei das wesentliche Klemmelement erst am Schluß der Einführungsarbeiten festgelegt werden kann. Dadurch erleichtern sich die Montagearbeiten erheblich.

Außerdem können die Kabeleinführungen vereinfacht werden, wenn der Boden des Muffensockels von der Mittelachse der Haubenmuffe aus nach beiden Außenseiten hin in spitzen Winkeln abgeschrägt wird, so daß hierdurch eine schräge Einführung der Kabel ebenfalls ermöglicht wird. Hier können dann entweder Kabeleinführungsstutzen angebracht werden oder es können - wenn es sich um einfache Bedingungen handelt - auch nur ausbrechbare oder ausschneidbare Verschlüsse vorgesehen werden.

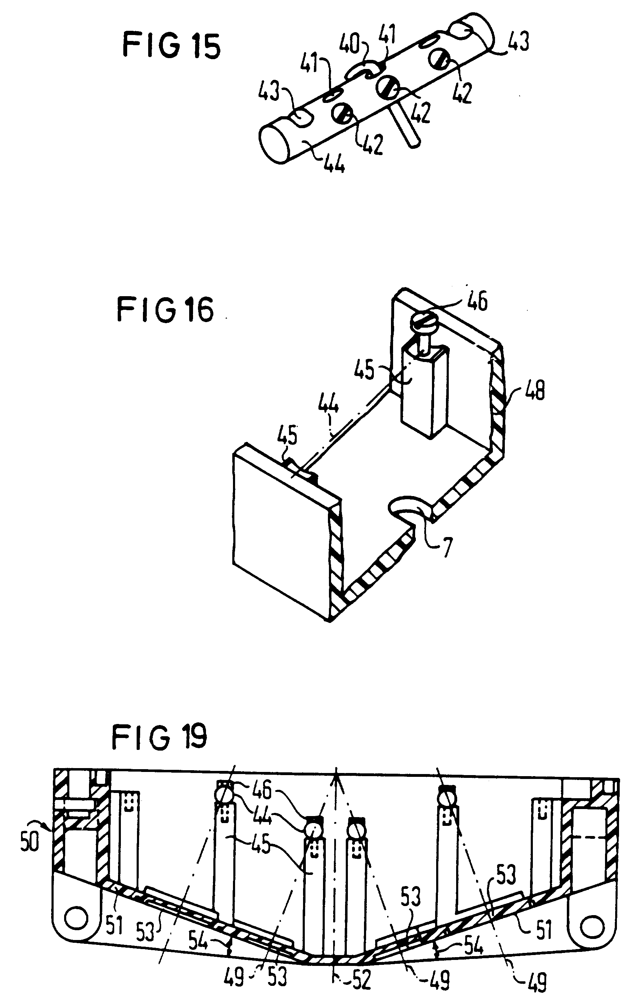

In Figur 15 wird ein Abfangelement 44 mit einer Klemmvorrichtung 41-42 für ein zentrales zugfestes Element 40 eines eingeführten Kabels erläutert. Dieses Abfangelement besteht hier aus einem Stab 44 mit beispielsweise rundem Querschnitt, in dem parallele Bohrungen 41 senkrecht zur Achse des Stabes 44 eingebracht sind. Diese Bohrungen 41 bilden zusammen mit dem Klemmelement 42 die Klemmvorrichtung 41-42 für jedes einzelne zugfeste Element 40. In diese Bohrungen 41 wird das zugfeste Element 40 eingeführt und mit Hilfe der Klemmschraube 42 fixiert. In dieser Ausführung sind zum Beispiel drei parallele Bohrungen 41 eines ersten Abfangelements 44 eingebracht; doch richtet sich die Zahl nach der Anzahl der abzufangenden Kabel. Bei der hier gezeigten Haubenmuffe sind jeweils zwei Kabeleinführungen nebeneinander und eine zentral dahinter angeordnet, so daß hier drei Bohrungen 41 zweckmäßig sind. So kann in die Mittelbohrung 41 beispielsweise das einzeln liegende Zugelement eingeführt werden, während die Zugelemente der beiden nebeneinander liegenden Kabel in die äußeren Bohrungen eines zweiten, jedoch gleich aufgebauten Abfangelementes eingeführt werden. Auf diese Weise ist ein einziger Typ für das Abfangelement 44 ausreichend. Der Stab 44 weist außerdem an beiden Enden je einen Schlitz 43 auf, der zur Einführung eines Befestigungsmittels, zum Beispiel je einer Schraube, dient, mit denen der Stab 44 auf Lagerelementen fixiert werden kann.

Die Figur 16 erläutert nun die zum Abfangelement 44 gehörigen Lagerelemente 45, hier in Form von Profilen, die im Auflagebereich 47 konkav gewölbt sind und der Form des Abfangelementes 44, zum Beispiel mit rundem Querschnitt, angepaßt sind. Die hier gezeigten Schrauben 46 werden in die Schlitze 43 beim Aufsetzen des Abfangelementes 44 eingeführt und festgezogen. Auf diese Weise ist somit Schutz gegen Einwirken von Schubkräften ebenfalls gegeben. Die Lagerelemente 45 sind zweckmäßigerweise als abstehende Profile der Wandung des Muffensockels 48 ausgebildet. Im Bodenteil des Muffensockels ist eine Einführungsöffnung 7 angedeutet.

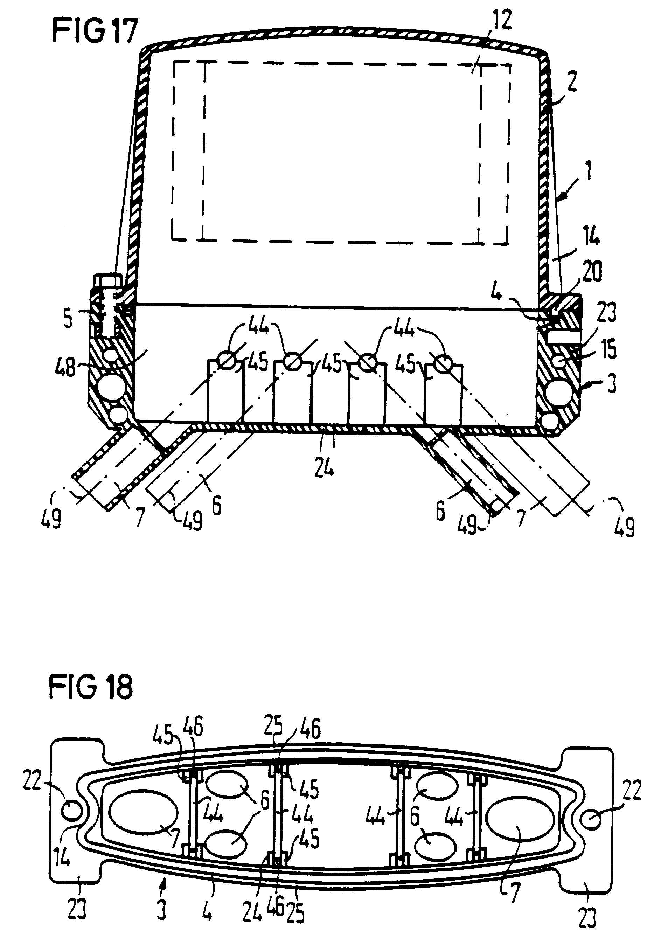

In Figur 17 wird ein Querschnitt durch die Haubenmuffe 1 gezeigt, in der die Kabeleinführungen 6 und 7 mit den Abfangelementen 44 und den Lagerelementen 45 gemäß der Erfindung zu erkennen sind. Durch die strichpunktiert eingezeichneten Achsen 49 der Kabeleinführungen wird klargestellt, daß die Kabelabfangungen mit den Bohrungen 41 in den Abfangelementen 44 in dieser Richtung liegen, so daß die zentralen Zugelemente der eingeführten Kabel in dieser Richtung aufgenommen werden können. Verformbare Zugelemente der Kabel werden zusätzlich nach der Einführung in den Bohrungen 41 umgebogen. Bei dieser Ausführung wird deutlich, daß der Einführungsraum der Haubenmuffe 1 weitgehend frei von störenden Elementen ist, so daß bei der Montage erhebliche Bewegungsfreiheit gegeben ist und daß die Adern bzw. Fasern der Kabel problemlos geführt werden können. Außerdem befinden sich in diesem Bereich keine Elemente, die eventuell zu Beschädigungen der Adern bzw. Fasern führen könnten.

Die Figur 18 zeigt den Muffensockel 3 in einer Draufsicht woraus die Lage der jeweils den Einführungsöffnungen 6 bzw. 7 zugeordneten Kabelabfangungen mit ihren Abfangelementen 44 und den Lagerelementen 45 erkennbar wird. Die Lagerelemente 45 sind zweckmäßigerweise Ausformungen an den Wandungen des Muffensockels 3. Für die Kabeleinführungen 7 wird ein Abfangelement 44 mit einer Mittelbohrung und für die nebeneinander liegenden Kabeleinführungen 6 ein Abfangelement mit zwei seitlichen Bohrungen benötigt, wenn nicht das vorher bereits beschriebene allgemeine Abfangelement mit drei Bohrungen 41 verwendet wird.

In Figur 19 wird ein Muffensockel 50 gezeigt, dessen Boden 51 von der Mittelachse 52 ausgehend nach beiden Außenseiten hin unter spitzen Winkeln 54 schräg aufwärts verläuft, so daß bereits hierdurch eine winkelige Einführungsrichtung vorgegeben ist. Im Prinzip ist hier jedoch die gleiche Konstellation; denn auch hier sind die Bohrungen der Abfangelemente 44 in der jeweiligen Richtung der Kabeleinführungsachsen gelegen, so daß die zentralen Zugelemente der Kabel geradlinig eingeführt und fixiert werden können. Weiterhin sind in diesem Schnittbild die an den Wandungen integrierten Lagerelemente 45 sichtbar, auf denen die Abfangelemente 44 gehalten werden. Bei dieser Ausführungsform sind die Kabeleinführungsöffnungen mit ausbrechbaren oder ausschneidbaren Verschlüssen 53 versehen; doch sind auch hier Anformungen von Einführungsstutzen möglich.

## Patentansprüche

1. Haubenmuffe (1) für die Aufnahme von Lichtwellenleiterspleißkassetten (12), bei der eine abnehmbare Abdeckhaube (2) auf einem Muffensockel (3) dicht aufgesetzt ist und der Muffensockel (3) mindestens eine von der Muffenlängsachse (38) unter einem Winkel (37) abweichende Kabeleinführung aufweist,
**dadurch gekennzeichnet,**
daß die Kabeleinführungen als Kabeleinführungsstutzen (6, 7) ausgebildet und an der Bodenplatte (24) des Muffensockels (3) angeordnet sind, daß Kabelabfangvorrichtungen (8) an jedem inneren Ende der Kabeleinführungsstutzen (6, 7) angeordnet sind und daß die Kabelabfangvorrichtung aus einer in Richtung der Kabeleinführungsachse (49) ausgerichteten Klemmvorrichtung (41-42) besteht.

2. Haubenmuffe nach Anspruch 1,
**dadurch gekennzeichnet,**
daß mehrere Kabeleinführungsstutzen (6, 7) in gleicher Winkelrichtung abstehen.

3. Haubenmuffe nach Anspruch 1,
**dadurch gekennzeichnet,**
daß die Kabeleinführungsstutzen (6, 7) in verschiedenen Winkelrichtungen abstehen.

4. Haubenmuffe nach einem der vorhergehenden Ansprüche,
**dadurch gekennzeichnet,**
daß die Kabeleinführungsstutzen (6, 7) zu beiden Seiten der Muffenlängsachse (38) spiegelbildlich, vorzugsweise unter gleichen Winkeln (37) abstehen.

5. Haubenmuffe nach einem der vorhergehenden Ansprüche,
**dadurch gekennzeichnet,**
daß die auf die Muffenlängsachse (38) bezogenen Winkel (37), unter denen die Kabeleinführungsstutzen (6, 7) abstehen, 0 bis 90°, vorzugsweise 45°, betragen.

6. Haubenmuffe nach einem der vorhergehenden Ansprüche,
**dadurch gekennzeichnet,**
daß Kabeleinführungsstutzen (6, 7) sowohl in der Bodenplatte (24) als auch an mindestens einer Seitenwand (23) schräg und/oder gerade angeordnet sind.

7. Haubenmuffe nach einem der vorhergehenden Ansprüche,
**dadurch gekennzeichnet,**
daß die Kabeleinführungsstutzen (6, 7) mit bei Bedarf entfernbaren dichten Abschlüssen (13) versehen sind.

8. Haubenmuffe nach Anspruch 7,
**dadurch gekennzeichnet,**
daß die Abschlüsse (13) ausbrechbar sind.

9. Haubenmuffe nach Anspruch 7,
**dadurch gekennzeichnet,**
daß die Abschlüsse als Stopfen (31) ausgebildet sind.

10. Haubenmuffe nach einem der vorhergehenden Ansprüche,
**dadurch gekennzeichnet,**
daß der Muffensockel (3) Aufnahmen für Lichtwellenleiterspleißkassetten (12) aufweist.

11. Haubenmuffe nach einem der vorhergehenden Ansprüche,
**dadurch gekennzeichnet,**
daß die inneren Breiten- und Höhenausdehnungen der Abdeckhaube (2) den Ausdehnungen einer Lichtwellenleiterspleißkassette (12) entsprechen und daß die innere Tiefenausdehnung mindestens der Tiefe einer Spleißaufnahme (12), vorzugsweise vier Spleißaufnahmen entspricht.

12. Haubenmuffe nach einem der vorhergehenden Ansprüche,
**dadurch gekennzeichnet,**
daß die Abdeckhaube (2) vorzugsweise ovalen Querschnitt aufweist, wobei seitlich Einziehungen (14) für die Einführung der Befestigungsmittel (5), vorzugsweise für Schrauben, eingeformt sind.

13. Haubenmuffe nach einem der vorhergehenden Ansprüche,
**dadurch gekennzeichnet,**
daß das Diuchtungssystem zwischen der Abdeckhaube (2) und dem MUffensockel (3) aus Nut- und Federausformungern (4, 20) und einer dauerelastischen oder dauerplastischen Dichtungseinlage (21) besteht.

14. Haubenmuffe nach einem der vorhergehenden Ansprüche,
**dadurch gekennzeichnet,**
daß in der Frontwandung (25) des Muffensockels (3) eine ausbrechbare Längsöffnung (18) angeordnet ist.

15. Haubenmuffe nach Anspruch 14,
**dadurch gekennzeichnet,**
daß die Längsöffnung (18) mit einem Dichtungssystem (16-17) umgeben ist.

16. Haubenmuffe nach Anspruch 15,
**dadurch gekennzeichnet,**
daß das Dichtungssystem (16-17) aus einer Ringnut (17) mit eingelegter Ringdichtung besteht.

17. Haubenmuffe nach einem der vorhergehenden Ansprüche,
**dadurch gekennzeichnet,**
daß Führungsvorrichtungen, vorzugsweise fluchtende Bohrungen (15) mit durchgesteckten Bolzen, über mehrere hintereinander liegende Haubenmuffen (1) angeordnet sind.

18. Haubenmuffe nach einem der vorhergehenden Ansprüche,
**dadurch gekennzeichnet,**
daß eine Befestigungseinrichtung, insbesondere ein Winkel ansatz (26) angeordnet ist.

19. Haubenmuffe nach einem der vorhergehenden Ansprüche,
**dadurch gekennzeichnet,**
daß eine Haltevorrichtung (55) zur Befestigung an einem Mast (33), vorzugsweise Befestigungsmittel für ein Spannband, angeordnet ist.

20. Haubenmuffe nach einem der vorhergehenden Ansprüche,
**dadurch gekennzeichnet,**
daß diese Klemmvorrichtung (41-42) in einem Abfangelement (44) angeordnet ist und daß das Abfangelement (44) in einem Lagerelement (45) am Muffenkörper (48) befestigt ist.

21. Haubenmuffe nach Anspruch 20,
**dadurch gekennzeichnet,**
daß das Abfangelement ein Stab (44) ist, vorzugsweise mit rundem Querschnitt und daß die Klemmvorrichtung (41-42) als Bohrung (41) mit quer dazu einwirkender KLemmschraube (42) ausgebildet ist.

22. Haubenmuffe nach einem der vorhergehenden Ansprüche,
**dadurch gekennzeichnet,**
daß das Abfangelement (44) an seinen Rändern Befestigungsmittel, vorzugsweise Schrauben, aufweist.

23. Haubenmuffe nach einem der vorhergehenden Ansprüche,
**dadurch gekennzeichnet,**
daß das Abfangelement (44) an seinen Rändern Einführschlitze (42) für Befestigungsmittel (46) aufweist.

24. Haubenmuffe nach einem der vorhergehenden Ansprüche,
**dadurch gekennzeichnet,**
daß das Lagerelement (45) im Auflagebereich (47) entsprechend der Form des Abfangelementes (44) angepaßt ist, vorzugsweise konkave Form aufweist.

25. Haubenmuffe nach einem der vorhergehenden Ansprüche,
**dadurch gekennzeichnet,**
daß der Bogen (51) des Muffensockels (50) von der Muffenmittelachse (52) aus nach beiden Außenseiten in spitzen Winkeln (54) nach aufwärts verlaufend abgeschrägt ist.

26. Haubenmuffe nach einem der vorhergehenden Ansprüche,
**dadurch gekennzeichnet,**
daß die Kabeleinführungen (53) mit ausbrechbaren oder ausschneidbaren Verschlüssen versehen sind.

27. Verfahren zur Montage einer Haubenmuffe nach einem der vorhergehenden Ansprüche,
**dadurch gekennzeichnet,**
daß die ein- und abgehenden Kabel (29, 30) in die Kabeleinführungsstutzen (6, 7) so eingeführt werden, daß die Richtung des Kabvelverlaufs weitergeführt ist.

28. Verfahren zur Montage einer Haubenmuffe nach einem der Ansprüche 1 bis 26,
**dadurch gekennzeichnet,**
daß die ein- bzw. auszuführenden Kabel in einem Bogen so zur Gegenseite der Haubenmuffe geführt werden, daß deren Einführung jeweils in einen gegen die Verlaufsrichtung der Kabel gerichteten Kabeleinführungsstutzen erfolgen kann, insbesondere bei Anordnung an einem Kabelmast (33).

## Claims

1. Sleeve with a cap (1) for the accommodation of optical waveguide splice cassettes (12), in which sleeve a removable covering cap (2) is placed tightly on a sleeve base (3) and the sleeve base (3) has at least one cable insertion means deviating by an angle (37) from the sleeve longitudinal axis (38), characterized in that the cable insertion means are designed as cable insertion stubs (6, 7) and are arranged on the baseplate (24) of the sleeve base (3), in that cable clamping devices (8) are arranged on each inner end of the cable insertion stubs (6, 7), and in that the cable clamping device consists of a clamping device (41-42) which is aligned in the direction of the cable insertion axis (49).

2. Sleeve with a cap according to Claim 1, characterized in that a plurality of cable insertion stubs (6, 7) stick out in the same angular direction.

3. Sleeve with a cap according to Claim 1, characterized in that the cable insertion stubs (6, 7) stick out in different angular directions.

4. Sleeve with a cap according to one of the preceding claims, characterized in that the cable insertion stubs (6, 7) stick out on both sides of the sleeve longitudinal axis (38) with mirror-image symmetry, preferably at the same angles (37).

5. Sleeve with a cap according to one of the preceding claims, characterized in that the angles (37), relative to the sleeve longitudinal axis (38), at which the cable insertion stubs (6, 7) stick out are 0 to 90°, preferably 45°.

6. Sleeve with a cap according to one of the preceding claims, characterized in that cable insertion stubs (6, 7) are arranged obliquely and/or in a straight line both in the baseplate (24) and on at least one side wall (23).

7. Sleeve with a cap according to one of the preceding claims, characterized in that the cable insertion stubs (6, 7) are provided with tight seals (13) which can be removed as required.

8. Sleeve with a cap according to Claim 7, characterized in that the seals (13) can be broken out.

9. Sleeve with a cap according to Claim 7, characterized in that the seals are designed as stoppers (31).

10. Sleeve with a cap according to one of the preceding claims, characterized in that the sleeve base (3) has receptacles for optical waveguide splice cassettes (12).

11. Sleeve with a cap according to one of the preceding claims, characterized in that the internal width and height extents of the covering cap (2) correspond to the extents of an optical waveguide splice cassette (12) and in that the inner depth extent corresponds at least to the depth of one splice receptacle (12), preferably to four splice receptacles.

12. Sleeve with a cap according to one of the preceding claims, characterized in that the covering cap (2) has a preferably oval cross-section, lateral drawing-in means (14) being moulded in for the insertion of the securing means (5), preferably for screws.

13. Sleeve with a cap according to one of the preceding claims, characterized in that the sealing system between the covering cap (2) and the sleeve base (3) consists of tongue and groove mouldings (4, 20) and a permanently elastic or permanently plastic sealing inlay (21).

14. Sleeve with a cap according to one of the preceding claims, characterized in that a longitudinal opening (18) which can be broken out is arranged in the front wall (25) of the sleeve base (3).

15. Sleeve with a cap according to Claim 14, characterized in that the longitudinal opening (18) is surrounded by a sealing system (16-17).

16. Sleeve with a cap according to Claim 15, characterized in that the sealing system (16-17) consists of an annular groove (17) with an inlaid ring seal.

17. Sleeve with a cap according to one of the preceding claims, characterized in that guide devices, preferably aligning holes (15) with pins pushed through, are arranged over a plurality of sleeves with a cap (1) located one behind another.

18. Sleeve with a cap according to one of the preceding claims, characterized in that a securing device, especially an angle attachment (26), is arranged.

19. Sleeve with a cap according to one of the preceding claims, characterized in that a holding device (55) for securing to a pole (33), preferably securing means for a tension band, is arranged.

20. Sleeve with a cap according to one of the preceding claims, characterized in that this clamping device (41-42) is arranged in a clamping element (44), and in that the clamping element (44) is secured in a supporting element (45) on the sleeve body (48).

21. Sleeve with a cap according to Claim 20, characterized in that the clamping element is a rod (44), preferably having a round cross-section, and in that the clamping device (41-42) is designed as a hole (41) having a clamping screw (42) acting transversely thereto.

22. Sleeve with a cap according to one of the preceding claims, characterized in that the clamping element (44) has at its edges securing means, preferably screws.

23. Sleeve with a cap according to one of the preceding claims, characterized in that the clamping element (44) has at its edges insertion slots (42) for securing means (46).

24. Sleeve with a cap according to one of the preceding claims, characterized in that the supporting element (45) is adapted to correspond to the shape of the clamping element (44) in the support region (47), and preferably has a concave shape.

25. Sleeve with a cap according to one of the preceding claims, characterized in that the curve (51) of the sleeve base (50) is bevelled, extending upwards at acute angles (54), from the sleeve central axis (52) towards both outer sides.

26. Sleeve with a cap according to one of the preceding claims, characterized in that the cable insertion means (53) are provided with closures which can be broken out or cut out.

27. Method for mounting a sleeve with a cap according to one of the preceding claims, characterized in that the incoming and outgoing cables (29, 30) are inserted into the cable insertion stubs (6, 7) in such a way that the direction of the extension of the cables is continued.

28. Method for mounting a sleeve with a cap according to one of Claims 1 to 26, characterized in that the cables to be fed in and fed out are led in a curve towards the opposite side of the sleeve with a cap in such a manner that their insertion can be carried out in each case into a cable insertion stub directed counter to the direction of extension of the cables, in particular in the case of an arrangement on a cable pole (33).

## Revendications

1. Manchon à chapeau (1) destiné à recevoir des cassettes (12) de jonctions de guides d'ondes lumineuses, dans lequel un chapeau (2) amovible de recouvrement est monté d'une manière étanche sur un socle (3) du manchon et le socle (3) du manchon comporte au moins une entrée de câble, qui fait un angle (37) avec l'axe longitudinal (38) du manchon, caractérisé par le fait
que les entrées de câbles sont réalisées sous la forme de tubulures (6,7) d'entrée de câbles et sont disposées sur la plaque de fond (24) du socle (3) du manchon, que des dispositifs (8) de saisie de câbles sont disposés à chaque extrémité intérieure des tubulures (6,7) d'entrée de câbles et que le dispositif de saisie de câbles est constitué d'un dispositif de serrage (41-42) dirigé dans la direction de l'axe (49) d'entrée de câble.

2. Manchon à chapeau suivant la revendication 1, caractérisé par le fait que plusieurs tubulures (6,7) d'entrée de câbles font saillie dans la même direction angulaire.

3. Manchon à chapeau suivant la revendication 1, caractérisé par le fait que les tubulures (6,7) d'entrée de câbles font saillie dans des directions angulaires différentes.

4. Manchon à chapeau suivant l'une des revendications précédentes, caractérisé par le fait que les tubulures (6,7) d'entrée de câbles font saillie symétriquement des deux côtés de l'axe longitudinal (38) du manchon, de préférence sous des angles identiques (37).

5. Manchon à chapeau suivant l'une des revendications précédentes, caractérisé par le fait que les angles (37), comptés par rapport à l'axe longitudinal (38) du manchon et sous lesquels s'étendent les tubulures (6,7) d'entrée de câbles, sont compris entre 0 et 90° et sont égaux de préférence à 45°.

6. Manchon à chapeau suivant l'une des revendications précédentes, caractérisé par le fait que les tubulures (6,7) d'entrée de câbles sont disposées en oblique et/ou en ligne droite à la fois dans la plaque de fond (24) et sur au moins une paroi latérale (23).

7. Manchon à chapeau suivant l'une des revendications précédentes, caractérisé par le fait que les tubulures (6,7) d'entrée de câbles sont équipées de terminaisons étanches (13) pouvant être retirées le cas échéant.

8. Manchon à chapeau suivant la revendication 7, caractérisé par le fait que les terminaisons (13) peuvent être arrachées.

9. Manchon à chapeau suivant la revendication 7, caractérisé par le fait que les terminaisons sont réalisées sous la forme de bouchons (37).

10. Manchon à chapeau suivant l'une des revendications précédentes, caractérisé par le fait que le socle (3) du manchon possède des logements pour des cassettes (12) de jonctions de guides d'ondes lumineuses.

11. Manchon à chapeau suivant l'une des revendications précédentes, caractérisé par le fait que les dimensions intérieures en largeur et en hauteur du chapeau de recouvrement (2) correspondent aux dimensions d'une cassette (12) de jonction de guides d'ondes lumineuses, et que la profondeur intérieure correspond au moins à la profondeur d'un logement de jonction (12), de préférence de quatre logements de jonctions.

12. Manchon à chapeau suivant l'une des revendications précédentes, caractérisée par le fait que le chapeau de recouvrement (2) a de préférence une section transversale ovale, des renfoncements pour l'introduction des moyens de fixation (5), de préférence pour des vis, étant aménagés latéralement.

13. Manchon à chapeau suivant l'une des revendications précédentes, caractérisé par le fait que le système d'étanchéité entre le chapeau de recouvrement (2) et le socle (3) du manchon est constitué par des configurations (4,20) du type à rainure et languette et par une pièce d'étanchéité (20) rapportée à élasticité ou plasticité permanente.

14. Manchon à chapeau suivant l'une des revendications précédentes, caractérisé par le fait qu'une ouverture longitudinale (18) pouvant être rompue par arrachement est disposée dans la paroi avant (25) du socle (3) du manchon.

15. Manchon à chapeau suivant la revendication 14, caractérisé par le fait que l'ouverture longitudinale (18) est entourée d'un système d'étanchéité (16-17).

16. Manchon à chapeau suivant la revendication 15, caractérisé par le fait que le système d'étanchéité (16-17) est constitué d'une rainure annulaire (17) dans laquelle est insérée une garniture d'étanchéité annulaire.

17. Manchon à chapeau suivant l'une des revendications précédentes, caractérisé par le fait que des dispositifs de guidage, de préférence des trous alignés (15), dans lesquels sont enfilés des chevilles, sont disposés dans plusieurs manchons à chapeau (1) disposés les uns derrière les autres.

18. Manchon à chapeau suivant l'une des revendications précédentes, caractérisé par le fait qu'il est prévu un dispositif de fixation, notamment une cornière (26).

19. Manchon à chapeau suivant l'une des revendications précédentes, caractérisé par le fait qu'il est prévu un dispositif de retenue (55) permettant la fixation à un poteau (33), de préférence des moyens de fixation pour un collier.

20. Manchon à chapeau suivant l'une des revendications précédentes, caractérisé par le fait que ce dispositif de serrage (41-42) est disposé dans un élément de réception (44) et que l'élément de réception (44) est fixé dans un élément de support (45) sur le corps (48) du manchon.

21. Manchon à chapeau suivant la revendication 20, caractérisé par le fait que l'élément de réception est un barreau (44), de préférence de section transversale circulaire, et que le dispositif de serrage (41-42) est agencé sous la forme d'un trou (41) ayant une vis de serrage (42) agissant transversalement par rapport à ce trou.

22. Manchon à chapeau suivant l'une des revendications précédentes, caractérisé par le fait que l'élément de réception (44) possède, sur ses bords, des moyens de fixation, de préférence des vis.

23. Manchon à chapeau suivant l'une des revendications précédentes, caractérisé par le fait que l'élément de réception (44) comporte, sur ses bords, des fentes d'introduction (42) pour des moyens de fixation (46).

24. Manchon à chapeau suivant l'une des revendications précédentes, caractérisé par le fait que l'élément de support (45) est adapté, dans la zone d'appui (47), à la forme de l'élément de réception (44), de préférence une forme concave.

25. Manchon à chapeau suivant l'une des revendications précédentes, caractérisé par le fait que le fond (51) du socle (50) du manchon s'étend, à partir de l'axe médian (52) du manchon, vers le haut en direction des deux côtés extérieurs, sous des angles aigus (58).

26. Manchon à chapeau suivant l'une des revendications précédentes, caractérisé par le fait que les entrées de câbles (53) comportent des dispositifs de fermeture pouvant être arrachés ou sectionnés.

27. Procédé de montage d'un manchon à chapeau suivant l'une des revendications précédentes, caractérisé par le fait qu'on introduit les câbles d'arrivée et de départ (29,30) dans les tubulures (6,7) d'entrée de câbles en conservant leur direction.

28. Procédé de montage d'un manchon à chapeau suivant l'une des revendications 1 à 26, caractérisé par le fait que les câbles devant être introduits ou ressortis sont guidés suivant un arc en direction du côté opposé du manchon à chapeau de telle sorte que leur entrée peut s'effectuer respectivement dans une tubulure d'entrée de câbles, qui est dirigée dans la direction dans laquelle s'étendent les câbles, notamment dans le cas du montage sur un poteau de support de câble (33).
